# EUROPÄISCHE PATENTSCHRIFT

(11) **EP 1 835 214 B1**
(45) Veröffentlichungstag und Bekanntmachung des Hinweises auf die Patenterteilung: **11.07.2012**
(21) Anmeldenummer: 07004200.7
(22) Anmeldetag: 01.03.2007
(51) Int. Cl.: F16L 3/04, F28D 20/00, F28F 9/013

(54) **Wärmespeicher**
Heat accumulator
Accumulateur thermique

(30) Priorität: 17.03.2006 DE 202006004396 U
(43) Veröffentlichungstag der Anmeldung: 19.09.2007
(73) Patentinhaber: Viessmann Werke GmbH & Co. KG, 35107 Allendorf (DE)
(72) Erfinder: Hartel, Manfred, 35066 Frankenberg (DE); Finnemann, Johannes, 59964 Medebach (DE); Naumann, Ralf, 35108 Allendorf (DE)
(74) Vertreter: Wolf, Michael

(56) Entgegenhaltungen:
- AT-U1- 7 834
- DD-A1- 246 159
- DE-C- 605 213
- DE-U1- 20 314 766
- GB-A- 1 422 446
- US-A- 2 451 699
- US-A- 2 542 442
- US-A- 3 341 232
- US-A- 3 397 431
- US-A- 3 848 839
- US-A- 4 267 994
- US-A- 6 105 907
- US-A- 6 142 216

## Beschreibung

Die Erfindung betrifft einen Wärmespeicher gemäß dem Oberbegriff des Patentanspruchs 1, wie er aus der US 6 142 216 A bekannt ist.

Derartige Wärmespeicher bestehen aus einem Speicherbehälter, in dem mindestens eine an einem Grundträgerelement befestigte, schraubenlinienförmig gewendelte Rohrleitung angeordnet ist, wobei das Grundträgerelement aus mindestens einem Halteelement besteht, das mit Stützstellen für die Rohrleitung versehen ist, wobei jeweils zwischen der Rohrleitung und der Stützstelle ein Kantenschutzelement angeordnet ist.

Ein Wärmespeicher bzw. Warmwasserspeicher der eingangs genannten Art ist im Prinzip nach der DE 83 05 901 U1 bekannt.

Eine mögliche Art der Befestigung von gewendelten Rohrleitungen oder Rohrwendeln bei Wärmeabsorbern ist in der DE 30 45 662 A1 offenbart. Danach werden die Stützstellen zur Aufnahme der gewendelten Rohrleitung oder Rohrwendel entweder durch Ausnehmungen in Form von aus Profilschenkeln ausgestanzten, rechteckförmigen Materialstücken ausgeformt, die in eine gemeinsame Richtung rechtwinklig umgebogen oder in Form von ausgestanzten Ausnehmungen in die Profilschenkel eingebracht sind. In diesem mit Stützstellen ausgebildeten Halteelement des Grundträgerelements wird die gewendelte Rohrleitung entweder mechanisch eingebracht oder von Hand eingelegt.

Je nach Ausführungsform des Wärmespeichers bzw. Warmwasserspeichers erfolgt die Fixierung der gewendelten Rohrleitung oder Rohrwendel in den Stützstellen mittels Maschendraht oder handelsüblichen Kabelbindern aus Kunststoff oder Metall. Die Montage dieser Vorrichtungen zum Schutz und zur Befestigung der Rohrleitung in den Stützstellen der Halteelemente erfolgt von Hand.

Nachteilig an der vorgenannten Konstruktion zur Befestigung der Rohrleitung oder der Rohrwendel in den Stützstellen ist die Tatsache, dass sich die Rohrleitung während des Betriebs durch unterschiedlich stark ausgebildete Lastwechsel in ihren Halterungen verschieben kann und somit Bewegungen erfährt, die häufig zur Kontaktreibung der Rohrleitung mit der Stützstelle führt, was zu Korrosion und damit zur Beschädigung der Rohrleitung oder im ungünstigsten Fall zum versagen des Wärmespeichers führen kann. Hinzu kommt eine betriebsbedingte Geräuschbildung im Wärmespeicher durch das Reiben der Rohrleitung in den Halteelementen, insbesonders im Bereich der Kanten.

Eine Abhilfemaßnahme für dieses Problem stellt das manuelle Auskleiden der Aussparungen da. Dabei dienen von Hand angefertigte und möglichst passgenau abgelängte schlauchförmige Gummi-Manschetten als Kantenschutz, um die Reibung der Rohrleitung an den Stützstellen und damit einhergehend eine unerwünschte Geräuschbildung beim Betrieb des wärmespeichers zu unterbinden. Der Einsetzbarkeit derartiger Schutzvorrichtungen sind aufgrund von wechselnden Einsatzbedingungen im Wärmespeicher bzw. Warmwasserspeicher relativ enge Grenzen gesetzt. Darüber hinaus ist die Montage dieser schlauchförmigen Gummi-Manschetten als Kantenschutzeinlagen in die Stützstellen der Halteelemente verhältnismäßig aufwendig, da dies aus technischen Gründen ausschließlich manuell erfolgen kann. Diese bekannte Lösung ist somit äußerst zeit- und kostenintensiv.

Der Erfindung liegt dementsprechend die Aufgabe zugrunde, bei einem Wärmespeicher der eingangs genannten Art die Befestigung der gewendelten Rohrleitung oder der Rohrwendel in der Stützstelle des Halteelements dahingehend zu verbessern, dass eine einfache Montage möglich und eine dauerhafte Halterung gegeben ist.

Diese Aufgabe wird mit einem Wärmespeicher der eingangs genannten Art durch die im Kennzeichen des Patentanspruchs 1 aufgeführten Merkmale gelöst.

Nach der Erfindung ist also vorgesehen, dass das Kantenschutzelement als formstabiles, sowohl an die Rohrleitung als auch an die Stützstelle formangepasstes und vorgefertigtes C- oder U-förmiges Bauelement ausgebildet ist, und das Halteelement zur Fixierung der Rohrleitung mit einer Befestigungsschiene versehen ist.

Mit anderen Worten ausgedrückt, erfüllt das Kantenschutzelement in seiner erfindungsgemäßen Ausführung die aufgabengemäßen Anforderungen an ein formstabiles, leicht und kostengünstig montierbares und für den Dauerbetrieb geeignetes Bauteil. Dabei kommen sowohl Ein- als auch Mehrfachkantenschutzelemente in Betracht, was noch genauer erläutert wird.

Das erfindungsgemäße Kantenschutzelement kann konstruktiv in verschiedenen Ausführungsformen ausgebildet sein. Mögliche vorteilhafte Weiterbildungen ergeben sich aus den abhängigen Patentansprüchen.

Das erfindungsgemäße Kantenschutzelement einschließlich seiner vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: eine Seitenansicht einer bevorzugten Ausführungsform des erfindungsgemäßen Kantenschutzelements;
- Figur 2: eine Schnittdarstellung durch das Kantenschutzelement gemäß Figur 1;
- Figur 3: eine Draufsicht des Kantenschutzelements gemäß Figur 1;
- Figur 4: eine perspektivische Darstellung des Kantenschutzelements gemäß Figur 1;
- Figur 5: eine vergrößerte Darstellung des äußeren Bereichs des Kantenschutzelements mit Verrastungselement gemäß Figur 1;
- Figur 6: eine perspektivische Darstellung eines Speicherbehälters mit montierter, gewendelter Rohrleitung;
- Figur 7: eine Schnittdarstellung durch ein Halteelement mit in den Stützstellen befestigter gewendelter Rohrleitung;
- Figur 8: eine Teilansicht eines Halteelements mit in Stützstellen eingebauten, erfindungsgemäßen Kantenschutzelementen und Befestigungsschiene;
- Figur 9: eine perspektivische Darstellung einer zweiten Ausführungsform des erfindungsgemäßen Kantenschutzelements mit zweifachem Rohraufnahmebereich; und
- Figur 10: eine perspektivische Darstellung einer dritten Ausführungsform des erfindungsgemäßen Kantenschutzelements mit dreifachem Rohraufnahmebereich.

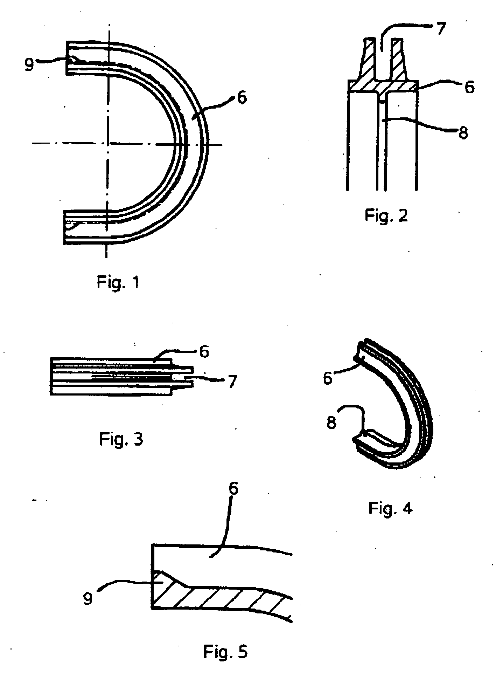

In den Figuren 1 bis 8 sind bevorzugte Ausführungsformen des erfindungsgemäßen Wärmespeichers dargestellt. Dieser umfasst in bei allen Ausführungsformen einen Speicherbehälter 1, in dem mindestens eine an einem Grundträgerelement 2 befestigte, schraubenlinienförmig gewendelte Rohrleitung 3 angeordnet ist, wobei das Grundträgerelement 2 aus mindestens einem Halteelement 4 besteht, das mit Stützstellen 5 für die Rohrleitung 3 versehen ist, wobei jeweils zwischen der Rohrleitung 3 und der Stützstelle 5 ein Kantenschutzelement 6 angeordnet.

Wesentlich ist nun, dass das Kantenschutzelement 6, wie eingangs erwähnt, als ein formstabiles, sowohl an die Rohrleitung 3 als auch an die Stützstelle 5 formangepasstes und vorgefertigtes Bauelement ausgebildet ist, und zwar vorzugsweise als Spritzgussbauelement aus widerstandsfähigem Kunststoffmaterial.

Eine bevorzugte Ausführungsform des Kantenschutzelements 6 ist in den Figuren 1 bis 5 und 8 in unterschiedlichen Ansichten dargestellt. Hieraus wird erkennbar, dass das Kantenschutzelement 6 schalenförmig, in C- oder U-Form, zur Einpassung in die Stützstelle 5 ausgebildet ist.

In Figur 2 ist das Kantenschutzelement 6 im Schnitt dargestellt. In dieser Darstellung ist zu erkennen, dass das Kantenschutzelement 6 stützstellenseitig mit einer umlaufenden, U-förmigen Ausnehmung 7 und rohrleitungsseitig mit einem umlaufenden, mittig angeordneten Vorsprung 8 ausgebildet ist. Die U-förmige, stützstellenseitige Ausnehmung 7 am Kantenschutzelement 6 ist in ihrer Breite der Wandstärke des Halteelements 4 angepasst, um das Kantenschutzelement 6 spielfrei in die Stützstelle 5 einsetzen zu können. Der rohrleitungsseitig mittig angeordnete umlaufende Vorsprung 8 am Kantenschutzelement 6 von einigen Millimetern Dicke dient zur Kontaktflächenminimierung der gewendelten Rohrleitung am Kantenschutzelement 6.

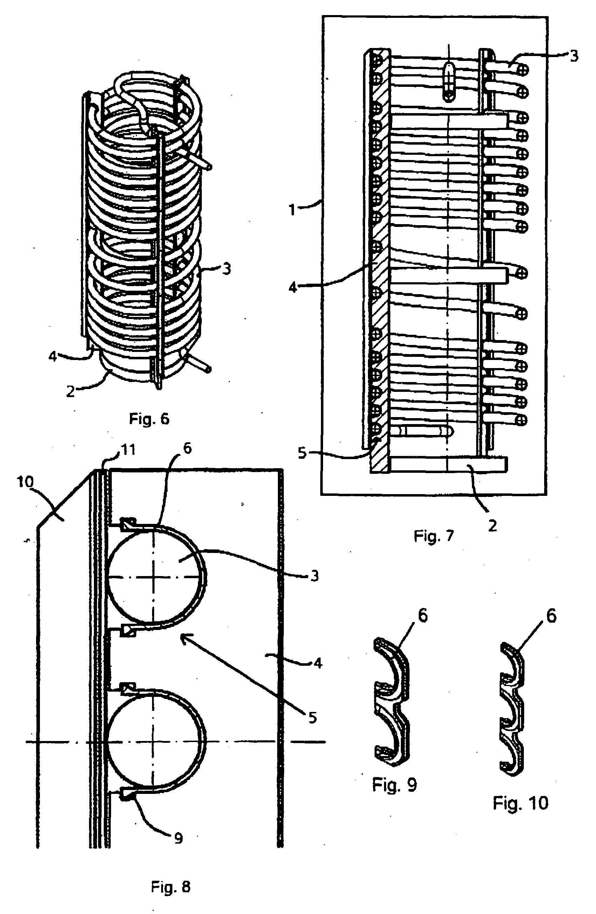

Vorteilhaft für die Montage des Kantenschutzelements 6 in der Stützstelle 5 des Halteelements 4 ist, dass das Kantenschutz element 6 mit mindestens einem Verrastungselement 9 zur Verrastung in der Stützstelle 5 versehen ist. In Figur 5 ist eine vergrößerte Darstellung des äußeren Bereichs des Kantenschutzelements 6 mit Verrastungselement 9 zu sehen; in Figur 8 ist die Stützstelle 5 mit eingebautem Kantenschutzelement 6 mit Verrastung im Halteelement 4 im Detail dargestellt. In dieser Darstellung ist das Kantenschutzelement 6 mit zwei Verrastungselementen 9 zur beidseitigen Fixierung des Kantenschutzelements 6 in der Stützstelle 5 gezeigt.

In Figur 8 ist darüberhinaus dargestellt, wie die Befestigung der Rohrleitung 3 am Halteelement 4 erfolgt. Dazu wird eine Befestigungsschiene 10, beispielsweise in Form einer U-Profilleiste, am Halteelement 4 vorzugsweise mittels Nietverbindung (alternativ: Schraubverbindung) befestigt. Zur vermeidung von direkten Kontaktstellen zwischen der Rohrleitung 3 und der Befestigungsschiene 10 ist diese auf der dem Halteelement 4 zugewandten Seite mit einer flach ausgebildeten, elastischen Schienenauflage 11 aus Kunststoff versehen. Die Schienenauflage 11 kann in ihrer Dicke den Anforderungen entsprechend variiert werden, sie betragt in dem hier vorgestellten Ausführungsbeispiel einige Millimeter. Vorteilhaft daran ist insbesonders, dass damit einerseits eine wirksame Geräuschdämmung und andererseits eine günstige Druckverteilung auf die Rohrleitung 3 im montierten Zustand gewährleistet ist, wobei die Rohrleitung 3 je nach Ausführung auch als sogenanntes Wellrohr ausgebildet sein kann.

Die Ausbildung der Stützstellen 5 am Halteelement 4 kann unterschiedlich erfolgen. Wenn das Halteelement 4 beispielsweise aus Profilstahl besteht, werden die Stützstellen 5 vorzugsweise durch Ausstanzen hergestellt. Alternativ können die Stützstellen 5 auch durch Ausschneiden, Aussägen oder Ausfräsen aus dem Halteelement 4 hergestellt werden.

In den Figuren 9 und 10 sind schließlich zwei weitere Ausführungsformen des erfindungsgemäßen Kantenschutzelements 6 dargestellt. Zur Rationalisierung der Montage des Kantenschutzelements ist dabei vorgesehen, dass dieses zur gleichzeitigen Aufnahme mehrerer Rohrleitungen 3 und zur Einpassung in entsprechend viele Stützstellen 5 als Mehrfachkantenschutzelement ausgebildet ist. Besonders bevorzugt ist dabei die Bevorratung von Einfach-, zweifach- und Dreifachelementen vorgesehen, da auf diese Weise die Halteelemente 4 auch bei möglicherweise ungleichmäßiger verteilung der Stützstellen 5 schnell und effektiv mit Kantenschutzelementen versehen werden können.

### Bezugszeichenliste

- 1: Speicherbehälter
- 2: Grundträgerelement
- 3: Rohrleitung
- 4: Halteelement
- 5: Stützstelle
- 6: Kantezischutzelement
- 7: Ausnehmung
- 8: Vorsprung
- 9: Verrastungselement
- 10: Befestigungsschiene
- 11: Schienenauflage

## Patentansprüche

1. Wärmespeicher, umfassend einen Speicherbehälter (1), in dem mindestens eine an einem Grundträgerelement (2) befestigte, schraubenlinienförmig gewendelte Rohrleitung (3) angeordnet ist, wobei das Grundträgerelement (2) aus mindestens einem Halteelement (4) besteht, das mit Stützstellen (5) für die Rohrleitung (3) versehen ist,
**dadurch gekennzeichnet,**
**dass** jeweils zwischen der Rohrleitung (3) und der Stützstelle (5) ein Kantenschutzelement (6) angeordnet ist,
**dass** das Kantenschutzelement (6) als formstabiles, sowohl an die Rohrleitung (3) als auch an die Stützstelle (5) formangepasstes und vorgefertigtes Bauelement ausgebildet ist,
**dass** das Kantenschutzelement (6) zur Einpassung in die Stützstelle (5) C- oder U-förmig ausgebildet ist und dass das Halteelement (4) zur Fixierung der Rohrleitung (3) mit einer Befestigungsschiene (10) versehen ist.

2. Wärmespeicher nach Anspruch 1,
**dadurch gekennzeichnet,**
**dass** das Kantenschutzelement (6) als Spritzgussbauelement, vorzugsweise aus widerstandsfähigem Kunststoffmaterial, ausgebildet ist.

3. Wärmespeicher nach Anspruch 1 oder 2,
**dadurch gekennzeichnet,**
**dass** das Kantenschutzelement (6) stützstellenseitig mit einer umlaufenden, U-förmigen Ausnehmung (7) versehen ist.

4. Wärmespeicher nach einem der Ansprüche 1 bis 3,
**dadurch gekennzeichnet,**
**dass** das Kantenschutzelement (6) rohrleitungsseitig mit einem umlaufenden, mittig angeordneten Vorsprung (8) versehen ist.

5. Wärmespeicher nach einem der Ansprüche 1 bis 4,
**dadurch gekennzeichnet,**
**dass** das Kantenschutzelement (6) mit mindestens einem Verrastungselement (9) zur Verrastung in der Stützstelle (5) versehen ist.

6. Wärmespeicher nach Anspruch 1,
**dadurch gekennzeichnet,**
**dass** die Befestigungsschiene (10) haltelementseitig mit einer flach ausgebildeten, elastischen Schienenauflage (11) versehen ist.

7. Wärmespeicher nach einem der Ansprüche 1 bis 6,
**dadurch gekennzeichnet,**
**dass** das Halteelement (4) aus Profilstahl besteht, wobei die Stützstellen (5) vorzugsweise in Form von Ausstanzungen am Halteelement (4) ausgebildet sind.

8. Wärmespeicher nach einem der Ansprüche 1 bis 7,
**dadurch gekennzeichnet,**
**dass** die Rohrleitung (3) in Form eines Wellrohres ausgebildet ist.

9. Wärmespeicher nach einem der Ansprüche 1 bis 8,
**dadurch gekennzeichnet,**
**dass** das Kantenschutzelement (6) zur gleichzeitigen Aufnahme mehrerer Rohrleitungen (3) und zur Einpassung in entsprechend viele Stützstellen (5) als Mehrfachkantenschutzelement ausgebildet ist.

10. Kantenschutzelement zum Einbau in einen Wärmespeicher nach den Ansprüchen 1 bis 9.

## Claims

1. A heat accumulator, comprising a storage container (1), in which at least one pipeline (3), which is fastened to a base carrier element (2) and is helically coiled, is arranged, the base carrier element (2) consisting of at least one holding element (4), which is provided with support points (5) for the pipeline (3),
**characterized in that** an edge protection element (6) is arranged in each case between the pipeline (3) and the support point (5),
the edge protection element (6) is implemented as a dimensionally stable, prefinished component which is adapted in shape to both the pipeline (3) and also the support point (5),
the edge protection element (6) is implemented as C-shaped or U-shaped for fitting into the support point (5), and
the holding element (4) is provided with a fastening rail (10) for fixing the pipeline (3).

2. The heat accumulator according to Claim 1,
**characterized in that** the edge protection element (6) is implemented as an injection-molded component, preferably made of resilient plastic material.

3. The heat accumulator according to Claim 1 or 2,
**characterized in that** the edge protection element (6) is provided on the support point side with a peripheral, U-shaped recess (7).

4. The heat accumulator according to one of Claims 1 to 3,
**characterized in that** the edge protection element (6) is provided on the pipeline side with a peripheral, centrally arranged projection (8).

5. The heat accumulator according to one of Claims 1 to 4,
**characterized in that** the edge protection element (6) is provided with at least one catch element (9) to catch in the support point (5).

6. The heat accumulator according to Claim 1,
**characterized in that** the fastening rail (10) is provided on the holding element side with a flatly implemented, elastic rail support (11).

7. The heat accumulator according to one of Claims 1 to 6,
**characterized in that** the holding element (4) consists of profiled steel, the support points (5) preferably being implemented in the form of punch-outs on the holding element (4).

8. The heat accumulator according to one of Claims 1 to 7,
**characterized in that** the pipeline (3) is implemented in the form of a corrugated pipe.

9. The heat accumulator according to one of Claims 1 to 8,
**characterized in that** the edge protection element (6) is implemented for simultaneously accommodating multiple pipelines (3) and for fitting into correspondingly many support points (5) as a multiple edge protection element.

10. An edge protection element for installation in a heat accumulator according to Claims 1 to 9.

## Revendications

1. Accumulateur de chaleur, comprenant un réservoir de stockage (1), dans lequel est installée au moins une conduite spiralée hélicoïdale (3), fixée à un élément de support de base (2), où l'élément de support de base (2) est constitué d'au moins un élément de maintien (4) pourvu de points d'appui (5) pour la conduite (3),
**caractérisé en ce que**
un élément de protection d'arête (6) est monté respectivement entre la conduite (3) et le point d'appui (5), **en ce que** l'élément de protection d'arête (6) est conçu comme un élément de construction préfabriqué, dimensionnellement stable, dont la forme est adaptée aussi bien à la conduite (3) qu'au point d'appui (5),
**en ce que** l'élément de protection d'arête (6) est conçu en forme de C ou de U afin de s'adapter au point d'appui (5), et
**en ce que** l'élément de maintien (4) est pourvu d'un rail de fixation (10), pour la fixation de la conduite (3).

2. Accumulateur de chaleur selon la revendication 1,
**caractérisé en ce que**
l'élément de protection d'arête (6) est conçu comme un élément de construction moulé par injection, de préférence à partir d'une matière plastique résistante.

3. Accumulateur de chaleur selon la revendication 1 ou 2,
**caractérisé en ce que**
l'élément de protection d'arête (6) est pourvu d'un évidement périphérique en forme de U (7) du côté du point d'appui.

4. Accumulateur de chaleur selon l'une des revendications 1 à 3,
**caractérisé en ce que**
l'élément de protection d'arête (6) est pourvu, côté conduite, d'une saillie périphérique (8) disposée au centre.

5. Accumulateur de chaleur selon l'une des revendications 1 à 4,
**caractérisé en ce que**
l'élément de protection d'arête (6) est pourvu d'au moins un élément d'encliquetage (9) pour l'encliquetage dans le point d'appui (5).

6. Accumulateur de chaleur selon la revendication 1, **caractérisé en ce que**
le rail de fixation (10) est pourvu d'un appui de rail élastique (11) conçu plat, du côté de l'élément de maintien.

7. Accumulateur de chaleur selon l'une des revendications 1 à 6,
**caractérisé en ce que**
l'élément de maintien (4) est constitué d'acier profilé, les points d'appui (5) étant de préférence conçus comme des découpages dans l'élément de maintien (4).

8. Accumulateur de chaleur selon l'une des revendications 1 à 7,
**caractérisé en ce que**
la conduite (3) est conçue comme un tube ondulé.

9. Accumulateur de chaleur selon l'une des revendications 1 à 8,
**caractérisé en ce que**
l'élément de protection d'arête (6) est conçu comme un élément de protection à plusieurs arêtes, pour la réception simultanée de plusieurs conduites (3) et l'adaptation à un nombre correspondant de points d'appui (5).

10. Élément de protection d'arête destiné à être monté dans un accumulateur de chaleur selon les revendications 1 à 9.
